# EUROPÄISCHE PATENTSCHRIFT

(11) **EP 3 424 127 B1**
(45) Veröffentlichungstag und Bekanntmachung des Hinweises auf die Patenterteilung: **30.11.2022**
(21) Anmeldenummer: 17708244.3
(22) Anmeldetag: 01.03.2017
(51) Int. Cl.: H02J 7/02, H04B 5/00, G07F 17/32

(54) **UNTERHALTUNGSSPIELGERÄT**
ENTERTAINMENT GAMING DEVICE
APPAREIL DE JEU DE DIVERTISSEMENT

(30) Priorität: 01.03.2016 DE 102016103602
(43) Veröffentlichungstag der Anmeldung: 09.01.2019
(73) Patentinhaber: Novomatic AG, 2352 Gumpoldskirchen (AT)
(72) Erfinder: KASEL, Dennis, 55411 Bingen am Rhein (DE)
(86) Internationale Anmeldenummer: PCT/EP2017/054825
(87) Internationale Veröffentlichungsnummer: WO 2017/149041

(56) Entgegenhaltungen:
- EP-A1- 2 608 169
- WO-A2-2010/020895
- US-A1- 2010 069 160
- US-A1- 2013 130 779
- DRIES VAN WAGENINGEN ET AL: "The Qi wireless power standard", POWER ELECTRONICS AND MOTION CONTROL CONFERENCE (EPE/PEMC), 2010 14TH INTERNATIONAL, IEEE, PISCATAWAY, NJ, USA, 6 September 2010 (2010-09-06), pages S15-25, XP031778417, ISBN: 978-1-4244-7856-9

## Beschreibung

Die Erfindung bezieht sich auf ein Unterhaltungsspielgerät mit einer rechnergesteuerten Spielablaufsteuerung, die in einem eine Ablagefläche aufweisenden Gehäuse untergebracht ist.

Unterhaltungsspielgeräte, die im Rahmen der Erfindung zum Einsatz kommen, sind in der Regel geldbetätigt und in den verschiedensten Ausführungsformen bekannt. Oftmals besitzen solche Unterhaltungsgeräte eine oder mehrere Spieleinrichtungen. Am häufigsten umfassen sie eine Symbol-Spieleinrichtung, bei der mit Umlaufkörpern hinter Ablesefenstern einen Gewinn oder Verlust angebende Symbolkombinationen angezeigt werden. Die Symbol-Spieleinrichtung kann Walzen und/oder Scheiben umfassen oder auf einem Bildschirm bedarfsweise dargestellt werden. In unterschiedlicher Höhe werden Geld- und/oder Punkte- und/oder Sonderspielgewinne mit gegenüber dem Normalspiel erhöhter Gewinnchance oder dergleichen in Aussicht gestellt oder gegeben.

Die Spieleinrichtungen verfügen über Symbole, die in bestimmten Kombinationen, die beispielsweise auf einem Gewinnplan dargestellt sind, mit einem Gewinn in Form von Geld und/oder Punkten verbunden sind. Im Weiteren können insbesondere auf modernen Bildschirmgeräten Hintergrundbilder dargestellt werden und darüber hinaus ist das Spielgeschehen durch Musik bzw. besondere Tonfolgen begleitet, die in dem Unterhaltungsspielgerät systemspezifisch gespeichert ist, bzw. sind.

Solchen Unterhaltungsspielgeräten können Spielerkarten oder dergleichen zugeordnet werden, mit denen sich Spieler an dem Spielgerät anmelden können, um beispielsweise bestimmte bevorzugte Einstellungen vorzunehmen oder eine Altersverifikation durchzuführen oder dergleichen.

Im Weiteren ist es aus der Praxis bekannt, Akkumulatoren mobiler Rechnereinrichtungen, beispielsweise von so genannten Smartphones oder Phablets, mittels Induktionstechnik zu laden. Damit verschiedene mobile Rechnereinrichtungen die gleichen Ladestationen zur drahtlosen Energieübertragung mittels elektromagnetischer Induktion über kurze Distanzen nutzen können, wurde der so genannte Qi- Standard geschaffen, der in jüngerer Zeit auch in Möbelstücke integriert wurde. Der Qi-Standard verwendet eine resonante induktive Kopplung zwischen einem Sender des Ladegerätes und einem Empfänger der mobilen Rechnereinrichtung. Um eine optimale Energieübertragung zu ermöglichen, tauschen der Sender und der Empfänger Daten aus, wobei der Sender ein Sendefeld moduliert und der Empfänger eine RFID-ähnliche Technik verwendet, um Daten an den Sender zu übermitteln.

Die Schrift US 2010/0069160 A1 offenbart ein tragbares Wettspielgerät und eine Docking-Station zur Versorgung des tragbaren Wettspielgerätes mit Energie und Daten.

Die Schrift WO 2010/020895 A2 offenbart ein Charge Pad zum Aufladen eines mobilen Gerätes, wobei das mobile Gerät mit dem Charge Pad Daten austauschen kann, um das Charge Pad auf die Eigenschaften des mobilen Gerätes einzustellen.

Die Schrift EP 2 608 169 A1 offenbart ein System, in dem ein Unterhaltungsspielgerät durch eine Verbindung mit einem mobilen Gerät Zugang zu einem Großraumnetzwerk wie dem Internet erhält.

Die Schrift US 2013/0130779 A1 offenbart ein Unterhaltungsspielgerät nach dem Oberbegriff des unabhängigen Anspruchs, wobei die Ablagefläche ein Sensor-Display für das Erfassen eines Pixel-Codes aufweist. Durch Auflegen eines Displays von einem mobilen Gerät auf das Sensor-Display können Daten durch den auf dem Display angezeigten Pixel-Code in das Unterhaltungsspielgerät eingegeben werden.

Die Schrift mit dem Titel "The Qi wireless power standard" von Dries van Wageningen et al ist enthalten im Konferenzband der POWER ELECTRONICS AND MOTION CONTROL CONFERENCE (EPE/PEMC), 2010 14TH INTERNATIONAL, IEEE, PISCATAWAY, NJ, USA, 6. September 2010 (2010-09-06), Seiten S15-25 bis S15-32, XP031778417, ISBN: 978-1-4244-7855-2.

Der Erfindung liegt die Aufgabe zugrunde, ein Unterhaltungsspielgerät der eingangs genannten Art zu schaffen, das mit einer mobilen Rechnereinrichtung, insbesondere deren Akkumulator, drahtlos verbindbar ist.

Erfindungsgemäß wird die Aufgabe durch die Merkmale des unabhängigen Anspruchs gelöst.

Die Unteransprüche stellen vorteilhafte Ausgestaltungen der Erfindung dar.

Die nachfolgenden alternativen Ausgestaltungen und Ausführungsbeispiele, die sich ausschließlich auf eine Geldeinzahlschale und somit nicht auf eine Geldauszahlschale beziehen, sind nicht beansprucht.

Ein Unterhaltungsspielgerät umfasst eine rechnergesteuerte Spielablaufsteuerung, die in einem eine Ablagefläche aufweisenden Gehäuse untergebracht ist. Unterhalb der Oberfläche der Ablagefläche ist eine mit der Spielablaufsteuerung verbundene stationäre Einrichtung zur drahtlosen Energieübertagung an einen Akkumulator einer mobilen Rechnereinrichtung angeordnet, wobei die Stromversorgung der Einrichtung bei einer Betriebsbereitschaft der Spielablaufsteuerung und/oder bei einer auf der Ablagefläche aufliegenden Rechnereinrichtung eingeschaltet ist.

Sobald die Spielablaufsteuerung in Betriebsbereitschaft versetzt, also das Unterhaltungsspielgerät spielbereit ist, besteht für den Benutzer des Unterhaltungsgerätes die Möglichkeit, den Akkumulator seiner mobilen Rechnereinrichtung, aufzuladen. Alternativ oder zusätzlich erfolgt eine Abfrage, ob eine zu ladende Rechnereinrichtung auf der Ablagefläche aufliegt, wodurch Energie gespart werden kann, da eine unnötige Spannungsversorgung der Einrichtung bei einer nicht vorhandenen oder nicht geeigneten oder nicht im Nahbereich angeordneten Rechnereinrichtung vermieden wird. Selbstverständlich sind der Akkumulator bzw. die Rechnereinrichtung für einen drahtlosen Ladevorgang geeignet. Die stationäre Einrichtung ist auch in der Lage den Ladestand des Akkumulators der mobilen Rechnereinrichtung festzustellen und beispielsweise eine Ladespannung oder eine Spannung zur Erhaltung der Ladung, insbesondere bei einem vollständig geladenen Akkumulator, einzustellen. Dies trägt zur Energieeinsparung bei und reduziert die Gefahr von Beschädigungen des Akkumulators aufgrund zu hoher Ladeströme/Ladespannungen.

Um Akkumulatoren mit unterschiedlichen Leistungen bzw. von unterschiedlichen Herstellern ohne eine Beschädigung zu laden und die Leistung der Einrichtung an den zu ladenden Akkumulator anzupassen, umfasst bevorzugt die stationäre Einrichtung eine Induktionsspule und eine Erkennungseinrichtung für Leistungsdaten des Akkumulators. Zur Anpassung der stationären Einrichtung an den zu ladenden Akkumulator und zur optimalen Energieübertragung tauschen die stationäre Einrichtung und der Akkumulator bzw. ein dem Akkumulator zugeordnete Empfänger Daten aus. Ein Sender der stationären Einrichtung moduliert dabei ein Sendefeld und ein dem Akkumulator zugeordneter Empfänger verwendet eine RFID-(radio frequency identification) Technik oder ähnliche Technik, um Daten an den Sender zu übermitteln. Eine Übertragung findet beispielsweise auf einer Frequenz zwischen 110kHz und 205 kHz statt. Damit die Betriebsspannung des Senders der stationären Einrichtung kompatibel mit häufig verwendeten Ladegeräten für sechszellige Lithium-Ionen-Akkus ist, beträgt sie vorzugsweise ca. 19 Volt. Die übertragene Leistung beträgt beispielsweise 5 Watt oder 120 Watt.

Der Einbau eines Funkentstörfilters, beispielsweise eines so genannten EMI-Filters, ermöglicht bei einem relativ geringen Aufwand die Reduzierung der leitungsgebundenen, hochfrequenten elektromagnetischen Störungen, die an der stationären Einrichtung anliegen können.

Zur Kommunikation umfasst in Ausgestaltung die stationäre Einrichtung ein Empfängersystem für elektromagnetische Wellen, das mit einem Prozessor gekoppelt ist, der die stationäre Einrichtung zur drahtlosen Energieübertagung an einen zu ladenden Akkumulator anpasst. Zweckmäßigerweise umfasst die stationäre Einrichtung ein mit dem Prozessor verbundenes, elektromagnetische Wellen erzeugendes Lesegerät zur Kommunikation mit einem der mobilen Rechnereinrichtung zuordenbaren Transponder. Die Datenübertragung folgt einem Standard, der der RFID- oder NFC- (near fjeld commuication) Technik ähnlich ist.

Nach einer Weiterbildung ist die Ablagefläche in eine Geldausgabeschale und/oder eine Geldeinzahlschale integriert. Die Geldausgabeschale bzw. die Geldeinzahlschale weisen in der Regel eine mehr oder weniger horizontale Fläche mit einer Größe auf, die eine sichere Auflage der mobilen Rechnereinrichtung ermöglicht, insbesondere sind die Geldausgabeschale und die Geldeinzahlschale in einem Standgerät eines Pults in einem Bereich untergebracht, der zu den Schaltern und Anzeigen, die von einem Benutzer in der Regel benötigt werden, entfernt ist. Darüber hinaus ist im Inneren des Unterhaltungsspielgerätes ein relativ großer Freiraum vorhanden, in dem sich die Installation der Einrichtung zur drahtlosen Energieübertagung nicht störend auswirkt.

Damit bei einer auf der Ablagefläche aufgelegten Rechnereinrichtung keine Beschädigung derselben aufgrund einer Auszahlung von Münzgeld erfolgt, ist vorzugsweise bei einer auf der Ablagefläche der Geldausgabeschale aufliegenden Rechnereinrichtung eine Geldauszahleinrichtung deaktiviert.

Bei einem System, das ein zuvor erläutertes Unterhaltungsspielgerät und eine mobile Rechnereinrichtung mit zumindest einem mit einem Empfängersystem der stationären Einrichtung kommunizierenden Transponder mit einer eindeutigen Kennung umfasst, ist bei Erkennung des Transponders ein in einer Speichereinrichtung der Spielablaufsteuerung hinterlegtes Spielerprofil aktivierbar ist.

Sonach kann der Benutzer des Unterhaltungsspielgerätes mittels seiner mobilen Rechnereinrichtung, die entweder einen Transponder umfasst oder der ein Transponder zugeordnet wird, das Unterhaltungsspielgerät personalisieren. Die Kommunikation folgt nach Standards, wie RFID oder NFC. Der Transponder bzw. die Kennung der mobilen Rechnereinrichtung wird in einem Speicher des Unterhaltungsspielgerätes hinterlegt und kann beispielsweise durch ein zusätzliches Passwort oder ein biometrisches Merkmal oder dergleichen gesichert sein. Nachdem die mobile Rechnereinrichtung erkannt ist, werden bestimmte personalisierte Einstellungen vorgenommen, z.B. die beliebtesten oder ausgewählte Spiele zur Auswahl angeboten, voreingestellte Einsatzlimits oder maximal Spieldauern berücksichtigt usw.. Selbstverständlich erfolgt mit dem Auflegen der mobilen Rechnereinrichtung auf die stationäre Einrichtung das Aufladen oder die Erhaltungsladung des Akkumulators der Rechnereinrichtung.

In weiterer Ausgestaltung umfasst das Spielerprofil mindestens einen Zählerstand einer Punktebank und/oder einer Guthabenanzeige des Unterhaltungsspielgerätes, wobei der Zählerstand bei einem Entfernen der mobilen Rechnereinrichtung aus einem Erfassungsbereich des Lesegerätes speicherbar ist. Verlässt der Benutzer das Unterhaltungsspielgerät und nimmt seine mobile Rechnereinrichtung mit, was üblicherweise erfolgt, lassen sich unterschiedliche Zustände des Unterhaltungsspielgerätes derart speichern, dass sie bei einem erneuten erkennen der Rechnereinrichtung in dem Erfassungsbereich der stationären Einrichtung entweder selbsttätig oder nach einem Aufruf abrufbar sind.

Zweckmäßigerweise erfolgt nach einer Erkennung des Transponders der mobilen Rechnereinrichtung eine Speicherung von Daten in einer Speichereinrichtung und/oder ein Auslesen von Daten aus der Speichereinrichtung des Unterhaltungsspielgerätes oder der Rechnereinrichtung durch eine entsprechende Befehlseingabe an dem Unterhaltungsspielgerät oder der Rechnereinrichtung. Selbstverständlich kann die mobile Rechnereinrichtung über eine Software verfügen, die die Bedienung im Zusammenhang mit dem Unterhaltungsspielgerät ermöglicht oder vereinfacht oder das Unterhaltungsspielgerät ist mit einer entsprechenden Software ausgestattet, die bei der Erkennung der mobilen Rechnereinrichtung startet.

Unter den im Rahmen der vorliegenden Beschreibung verwendeten Begriff Geld oder Münzen lassen sich selbstverständlich sämtlich Bezahlmöglichkeiten subsumieren, insbesondere Token, Medaillen, Wertmarken, Bezahlkarten oder dergleichen, ohne den Rahmen der Erfindung zu verlassen.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand mehrerer Ausführungsbeispiele unter Bezugnahme auf die zugehörige Zeichnung näher erläutert. Es zeigt:

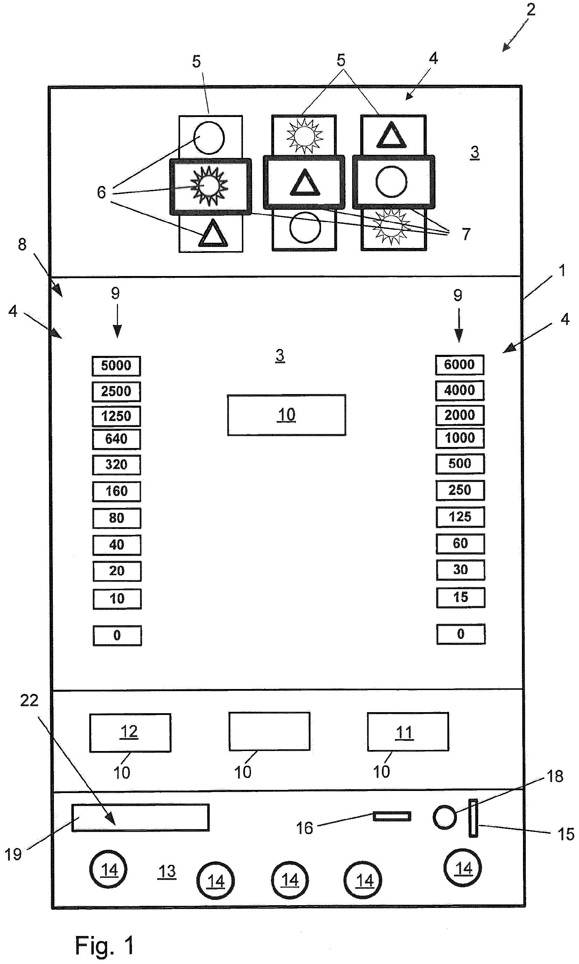

Fig. 1 eine schematische Vorderansicht eines Unterhaltungsspielgerätes nach der Erfindung,
Fig. 2 eine schematische Vorderansicht des Unterhaltungsspielgerätes nach Fig. 1 in alternativer Ausgestaltung,
Fig. 3 ein schematischer Querschnitt einer Teildarstellung des Unterhaltungsspielgerätes nach Fig. 2,
Fig. 4 eine vereinfachte schematische Darstellung einer Einzelheit IV gemäß Fig. 3,
Fig. 5 eine schematische Teildarstellung der Einzelheit IV gemäß Fig. 3.

Ein beispielsweise zur Aufhängung an einem Gestell oder einer Wand geeignetes Gehäuse 1 des geldbetätigten, rechnergesteuerten Unterhaltungsspielgerätes 2 mit Gewinnmöglichkeit weist auf seiner Vorderseite übereinander angeordnete Bildschirme 3 auf, die zur Darstellung von Spieleinrichtungen 4 und/oder Informationen, insbesondere spielrelevanter Informationen, wie z.B. eines Gewinnplans, dienen. Beispielhaft ist eine der Spieleinrichtungen 4 als eine Symbolspieleinrichtung mit drei nebeneinander angeordneten Umlaufkörpern 5 optisch dargestellt. Durch eine Spielablaufsteuerung 24 wird rechnergesteuert ein Bild erzeugt, das den sich drehenden Umlaufkörpern 5 mit umfangsseitigen Symbolen 6 entspricht. Im Weiteren werden rechnergesteuert Ablesefenster 7 auf dem Bildschirm 3 dargestellt, die der Anzeige eines zufallsgesteuerten Spielergebnisses, also einer bestimmten Kombination von Symbolen 6, dienen. Mit der Darstellung des Spielergebnisses geht eine Anzeige der virtuellen Umlaufkörper 5 einher, die stillgesetzten Walzen entspricht. Aus den angezeigten Symbolen 6 kann der Benutzer das Spielergebnis ablesen, insbesondere auch, ob ein Gewinn nach einem anzeigbaren Gewinnplan vorliegt.

Der Bildschirm 2 in der Mitte des Unterhaltungsspielgerätes 2 ist beispielhaft als Touchscreen 8 ausgebildet und dient beispielsweise zur Darstellung von als Risikoleitern 9 ausgebildeten Spieleinrichtungen 4. Beispielsweise kann ein erzielter Gewinn als Einsatz in eine der beiden Risikoleitern 9 zum Weiterspielen übertragen werden.

Zwischen den beiden Risikoleitern 9 ist in diesem Fall eine Anzeige 10 vorgesehen, die beispielsweise Bestandteil einer dem Fachmann bekannten Jackpot-Einrichtung ist und zur Anzeige von Punkten dient, die in Abhängigkeit von einem erreichten Spielergebnis erzielt werden.

Ein Abschnitt des Unterhaltungsspielgerätes 1 unterhalb der Bildschirme 3 ist mit weiteren Anzeigen 10 für Guthaben, Punkte, Gewinne und dergleichen versehen, wobei eine der Anzeigen 10 eine Punktebank 11 repräsentiert. Bei einem Guthaben in einer als Guthabenanzeige 12 ausgeführten Anzeige 10 wird ein bestimmter Geldbetrag aus der Guthabenanzeige 12 in eine bestimmte Punkteanzahl umgewandelt und in der Punktebank 11 aufaddiert, von der eine bestimmte Punktezahl als Einsatz für ein Spiel in der Spieleinrichtung 4 abgebucht und in der in der Spieleinrichtung 4 gewonnene Punkte aufaddiert werden. Bei einer Auszahlung eines Geldwertes wird zunächst der Punktewert der Punktebank 11 in ein in der Guthabenanzeige 12 dazustellendes Guthaben in einem vorgegebenen Zeittakt umgewandelt.

In einem unteren Gehäuseabschnitt 13 des Unterhaltungsspielgerätes 2 sind in der vorliegenden Ausführung als Drucktasten 14 ausgebildete Nachstart-/ Stopptasten angeordnet. Mit deren Beaufschlagung das in der Spieleinrichtung 4 angezeigte Symbol 6 des zugeordneten Umlaufkörpers 5 optional nachgestartet bzw. vorzeitig stillgesetzt werden kann, d. h. die Anzeige derart beeinflusst wird, dass die Umlaufkörper 5 stillstehend oder rotierend erscheinen. Ferner sind ein Münzeinwurfschlitz 15 und ein Geldscheineingabeschlitz 16 einer nicht näher dargestellten Geldverarbeitungseinrichtung 17 vorgesehen. Des Weiteren ist neben dem Münzeinwurfschlitz 15 eine Rückgabetaste 18 angeordnet, durch deren Betätigung ein in der Guthabenanzeige 12 angezeigtes Guthaben in eine Geldausgabeschale 19 abrufbar ist.

Die Geldverarbeitungseinrichtung 17 kann eine Münzverarbeitungseinrichtung und/oder eine Geldscheinverarbeitungseinrichtung aufweisen, welche voneinander baulich getrennt sein können bzw. beabstandet angeordnet sein können.

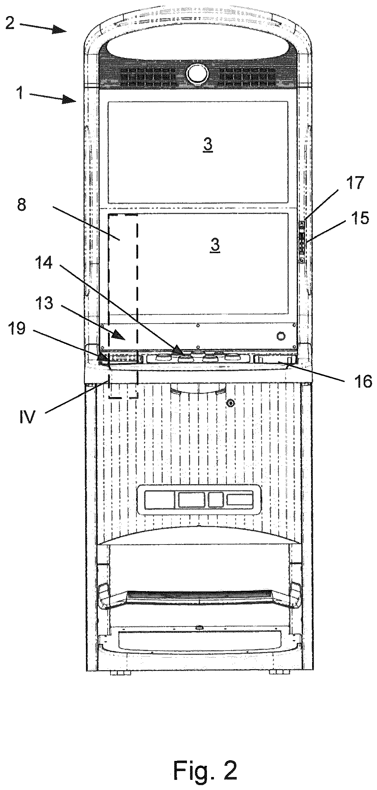

Der Geldscheinverarbeitungseinrichtung beziehungsweise dem Geldscheineingabeschlitz 16 (Fig. 2) kann vorzugsweise eine Geldeinzahlschale vorgelagert sein. Eine solche Geldeinzahlschale weist eine Auflagefläche zum Auflegen der Banknote auf, welche Auflagefläche beidseitig von Positionierflanken begrenzt sein kann, um die Banknoten quer zur Einführrichtung mittig zum Geldscheineingabeschlitz 16 bzw. an einer vorbestimmten Einführkante auszurichten. Die Auflagefläche kann als integrierter Teil des Gehäuseabschnittes nach Art eines Pultes ausgebildet sein. Die Auflagefläche ist vorzugsweise als horizontale Fläche mit einer Größe ausgebildet, die gleichfalls eine sichere Auflage der mobilen Rechnereinrichtung ermöglicht, also eine sichere Ablagefläche für die mobile Rechnereinrichtung bildet.

Der Geldscheineingabeschlitz 16 kann ein Mundstück aufweisen, welches mit der Geldscheinverarbeitungseinrichtung zusammenwirkt. Insbesondere erleichtern solche Mundstücke das exakte Positionieren der einzuführenden Banknoten.

In einer Ausbildung kann das Mundstück separat von dem Geldscheinverarbeitungseinrichtung ausgebildet sein, wobei das Mundstück insbesondere an einem beweglichen Gehäuseteil montiert und/oder in dieses integriert sein kann, so dass das Mundstück durch Wegbewegen des Gehäuseteils von der Geldscheinverarbeitungseinrichtung entfernt werden kann, welche Geldscheinverarbeitungseinrichtung vorteilhafterweise innerhalb des Gerätegehäuses montiert ist. Insbesondere kann das Mundstück an einer schwenkbar gelagerten Tür oder einem schwenkbar gelagerten Pult angebracht sein, so dass das Mundstück durch Aufschwenken der Tür von der Geldscheinverarbeitungseinrichtung entfernt und durch Zuschwenken der Tür passgenau vor der Geldscheinverarbeitungseinrichtung platziert werden kann. Gleichfalls kann die Geldeinzahlschale bzw. die Ablagefläche für die mobile Rechnereinrichtung integrierter Teil der schwenkbar gelagerten Tür oder des Pultes sein und somit mit der Tür bzw. dem Pult mitbewegt werden. Das Schwenken kann je nach Erfordernis oder Gegebenheit um eine horizontale oder vertikale Achse erfolgen.

In alternativer Ausgestaltung umfasst das als Standgehäuse ausgebildete Gehäuse 1 des Unterhaltungsspielgerätes 2 zwei übereinander angeordnete Bildschirme 3, von denen der obere Bildschirm 3 zur Darstellung von spielbezogenen Informationen und der untere Bildschirm zur Darstellung einer Spieleinrichtung dient. In dem Gehäuseabschnitt 13 unterhalb des unteren Bildschirms 2, der als Touchscreen 8 ausgebildet ist, sind unter anderem die Drucktasten 14, die Anzeigen 10 sowie die Geldausgabeschale 19 angeordnet. Dieser Gehäuseabschnitt 19 steht nach Art eines Pultes über die Unterhaltungsspielgerätefront in Richtung eines Benutzerbedienplatzes vor.

Um einem Benutzer der Unterhaltungsspielgerätes 2 die Möglichkeit einzuräumen einen Akkumulator 20 seiner insbesondere als ein so genanntes Smartphone oder ein Phablet ausgebildeten mobilen Rechnereinrichtung 21 ohne Nutzung eines Verbindungskabels und einer dementsprechenden Kabel-Schnittstelle an dem Unterhaltungsspielgerät 2 zu laden, ist der als Ablagefläche 22 dienenden Geldausgabeschale 19 eine stationäre Einrichtung 23 zur drahtlosen Energieübertagung per Induktion an den entsprechend ausgebildeten Akkumulator 20 der mobilen Rechnereinrichtung 21 angeordnet. Hierbei liegt die Rechnereinrichtung 21 in der Geldausgabeschale 19 ein und die Einrichtung 23 ist unterhalb der Ablagefläche 22 der Geldausgabeschale 19 für den Benutzer unsichtbar angeordnet.

Die Einrichtung 23 zur drahtlosen Energieübertagung ist derart mit der Spielablaufsteuerung 24 gekoppelt, dass die Stromversorgung der Einrichtung 23 bei einer Betriebsbereitschaft der Spielablaufsteuerung 24 und/oder bei der auf der Ablagefläche 22 aufliegenden Rechnereinrichtung 21 eingeschaltet ist. Die Einrichtung 23 zur drahtlosen Energieübertagung ist derart nach dem QI-Standard ausgestaltet, dass sie unterschiedliche Akkumulatoren 20 sowie deren Ladezustände erkennt, um zur Vermeidung einer Beschädigung des Akkumulators 20 in einen Lademodus oder einen Ladungserhaltungsmodus zu schalten oder die Spannungsversorgung abzuschalten.

Eine derartige Einrichtung 23 zur drahtlosen Energieübertagung umfasst im Wesentlichen eine Sendespule 25, die mit einer Spannungsquelle gekoppelt ist, beispielsweise unter Zwischenschaltung der Spielablaufsteuerung 24 sowie eine rechnergesteuerten erste Überwachungseinrichtung 26, die mit der Sendespule 25 und einer ersten Kommunikationseinrichtung 27 der stationären Einrichtung 23 kommuniziert.

Der Akkumulator 20 der mobilen Rechnereinrichtung 21 steht mit einer Empfangsspule 28 in Verbindung, die mit einer zweiten Überwachungseinrichtung 29 kommuniziert, wobei die zweite Überwachungseinrichtung 29 an eine zweite Kommunikationseinrichtung 30 angeschlossen ist.

Selbstverständlich umfassen die erste Überwachungseinrichtung 26 und die zweite Überwachungseinrichtung 29 entsprechende Prozessoren und Speicher oder sind mit diesen gekoppelt, wenn die entsprechenden Bauteile der Spielablaufsteuerung 24 oder der Rechnereinrichtung 21 nutzbar sind.

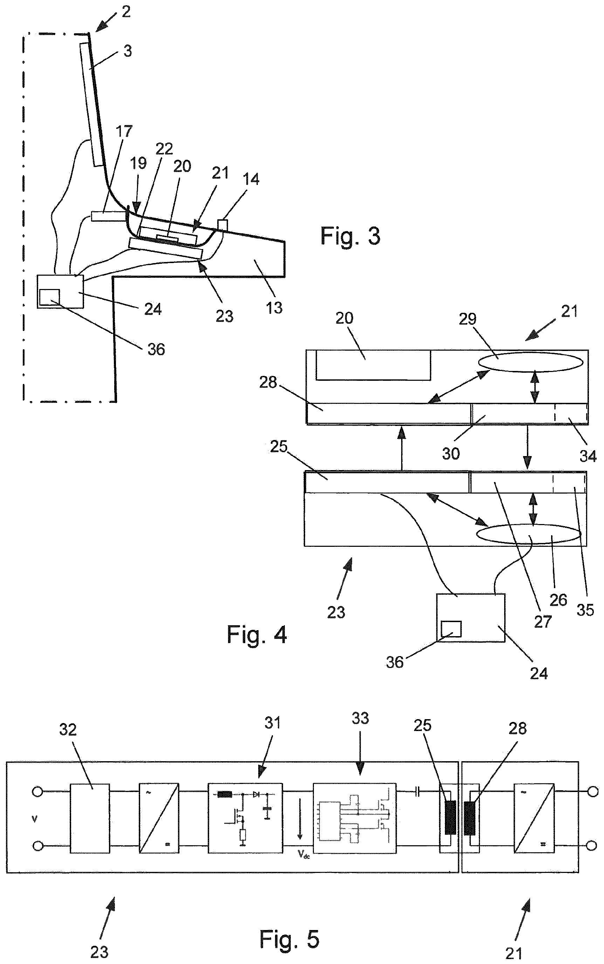

Gemäß Fig. 5 werden in einer ersten Stufe 31 der stationären Einrichtung 23 unterschiedliche Netzspannungen, beispielsweise zwischen 100 V und 240 V bevorzugt zwischen 90V und 264V automatisch erkannt und ausgeregelt. Die erste Stufe 31 kann beispielsweise als ein aktiver oder passiver Leistungsfaktorkorrekturfilter (PFC = Power Factor Correction) ausgebildet sein, dem zumindest ein EMI-Funkentstörfilter 32 vorgeschaltet ist.

In einer zweiten Stufe 32, die auch als Resonanzstufe bezeichnet wird, wird eine Leistungstransformation durchgeführt, um einen Leistungsbereich von 0,1 bis 100 Watt abzudecken und damit die Ladung verschiedener Akkumulatoren 21 zu ermöglichen.

Um neben der drahtlosen Energieübertragung auch eine Datenübertragung zu realisieren, erfolgt im einfachsten Fall ein Ein- und Ausschalten eines zweiten hochfrequenten Magnetfeldes, was einer Amplitudenmodulation entspricht. Hierdurch wird eine elektrische Spannung in der Spule des jeweiligen Empfängers induziert, die über eine Diode gleichgerichtet wird. Die Signalübertragung erfolgt so in beide Richtungen.

Umfasst beispielsweise die zweite Kommunikationseinrichtung 30 einen Transponder 34 oder dergleichen zur eindeutigen Identifizierung der Rechnereinrichtung 21, die gegebenenfalls mit einer entsprechenden Software versehen ist, kann die Rechnereinrichtung 21 mit einem als ein Lesegerät ausgebildeten oder ein Lesegerät für die Transponderdaten umfassenden Empfängersystem 35 der ersten Kommunikationseinrichtung 27 der stationären Einrichtung 23 kommunizieren und zwar neben dem Aukkumulatorinformationen betreffenden Datenaustausch auch derart mit der Spielablaufsteuerung 24, dass bei einer Erkennung des Transponders 34 ein in einer Speichereinrichtung 36 der Spielablaufsteuerung 24 hinterlegtes Spielerprofil aktivierbar ist, wobei das Spielerprofil mindestens einen Zählerstand einer Punktebank 11 und/oder einer Guthabenanzeige 12 des Unterhaltungsspielgerätes 2 umfasst. Eine Speicherung entsprechender Daten in der Speichereinrichtung 36 bzw. ein Auslesen von Daten aus der Speichereinrichtung 36 des Unterhaltungsspielgerätes 2 erfolgt nach einer entsprechenden Befehlseingabe an dem Unterhaltungsspielgerät 2 oder der Rechnereinrichtung 21, beispielsweise durch Beaufschlagung einer entsprechenden Befehlstaste.

Es ist auch möglich, dass bei einer Erkennung der auf der Ablagefläche 22 in der Geldausgabeschale 19 aufliegenden Rechnereinrichtung 21 die Spielablaufsteuerung 24 von der ersten Überwachungseinrichtung 26 eine Information erhält, um die Geldverarbeitungseinrichtung 17 derart anzusteuern, dass keine Geldauszahlung erfolgt und nach der Entnahme der Rechnereinrichtung 21 von der Ablagefläche 22 die Geldauszahlung in die Geldausgabeschale 19 freigibt.

**Bezugszeichen**

| | | | |
|---|---|---|---|
| 1. | Gehäuse | 20. | Akkumulator |
| 2. | Unterhaltungsspielgerät | 21. | Rechnereinrichtung |
| 3. | Bildschirme | 22. | Ablagefläche |
| 4. | Spieleinrichtung | 23. | Einrichtung |
| 5. | Umlaufkörper | 24. | Spielablaufsteuerung |
| 6. | Symbol | 25. | Sendespule |
| 7. | Ablesefenster | 26. | erste Überwachungseinrichtung |
| 8. | Touchscreen | 27. | erste Kommunikationseinrichtung |
| 9. | Risikoleiter | 28. | Empfangsspule |
| 10. | Anzeige | 29. | zweite Überwachungseinrichtung |
| 11. | Punktebank | 30. | zweite Kommunikationseinrichtung |
| 12. | Guthabenanzeige | 31. | erste Stufe |
| 13. | Gehäuseabschnitt | 32. | EMI-Funkentstörfilter |
| 14. | Drucktaste | 33. | zweite Stufe |
| 15. | Münzeinwurfschlitz | 34. | Transponder |
| 16. | Geldscheineingabeschlitz | 35. | Empfängersystem |
| 17. | Geldverarbeitungseinrichtung | 36. | Speichereinrichtung |
| 18. | Rückgabetaste | | |
| 19. | Geldausgabeschale | | |

## Patentansprüche

1. Unterhaltungsspielgerät mit einer Geldverarbeitungseinrichtung (17) und einer rechnergesteuerten Spielablaufsteuerung (24), die in einem eine Ablagefläche (22) aufweisenden Gehäuse (1) untergebracht ist, wobei unterhalb der Oberfläche der Ablagefläche (22) eine mit der Spielablaufsteuerung (24) verbundene stationäre Einrichtung (23) zur drahtlosen Energieübertagung an einen Akkumulator (20) einer mobilen Rechnereinrichtung (21) angeordnet ist, **dadurch gekennzeichnet, dass** die Stromversorgung der Einrichtung (23) bei einer Betriebsbereitschaft der Spielablaufsteuerung (24) und/oder bei einer auf der Ablagefläche (22) aufliegenden Rechnereinrichtung (21) eingeschaltet ist, wobei die Ablagefläche (22) in eine Geldausgabeschale (19) integriert ist, und wobei im Fall bei einer auf der Ablagefläche (22) der Geldausgabeschale (19) aufliegenden Rechnereinrichtung (21) eine Geldauszahleinrichtung deaktiviert ist, wobei die Spielablaufsteuerung (24) von einer ersten Überwachungseinrichtung (26) eine Information erhält, um die Geldverarbeitungseinrichtung (17) derart anzusteuern, dass keine Geldauszahlung erfolgt und nach der Entnahme der Rechnereinrichtung (21) von der Ablagefläche (22) die Geldauszahlung in die Geldausgabeschale (19) freigibt.

2. Unterhaltungsspielgerät nach Anspruch 1, **dadurch gekennzeichnet, dass** die stationäre Einrichtung (23) eine Induktionsspule und eine Erkennungseinrichtung für Leistungsdaten des Akkumulators umfasst.

3. Unterhaltungsspielgerät nach Anspruch 1, **dadurch gekennzeichnet, dass** die stationäre Einrichtung (23) einen Funkentstörfilter (32) umfasst.

4. Unterhaltungsspielgerät nach einem der Ansprüche 1 bis 2, **dadurch gekennzeichnet, dass** die stationäre Einrichtung (23) ein Empfängersystem (35) für elektromagnetische Wellen umfasst, das mit einem Prozessor gekoppelt ist, der die stationäre Einrichtung (23) zur drahtlosen Energieübertagung an einen zu ladenden Akkumulator (20) anpasst.

5. Unterhaltungsspielgerät nach Anspruch 4, wobei das Empfängersystem (35) zur Kommunikation mit einem der mobilen Rechnereinrichtung (21) zuordenbaren Transponder (34) ausgebildet ist.

6. Unterhaltungsspielgerät nach Anspruch 5, wobei mittels der stationären Einrichtung (23) bei Erkennung des Transponders (34) ein in einer Speichereinrichtung (36) der Spielablaufsteuerung (24) hinterlegtes Spielerprofil aktivierbar ist.

7. Unterhaltungsspielgerät nach Anspruch 6, **dadurch gekennzeichnet, dass** das Spielerprofil mindestens einen Zählerstand einer Punktebank (11) und/oder einer Guthabenanzeige (12) des Unterhaltungsspielgerätes (2) umfasst, wobei der Zählerstand bei einem Entfernen der mobilen Rechnereinrichtung (21) aus einem Erfassungsbereich des Empfängersystems (35) speicherbar ist.

8. Unterhaltungsspielgerät nach Anspruch 6 oder 7, **dadurch gekennzeichnet, dass** nach einer Erkennung des Transponders (34) der mobilen Rechnereinrichtung (21) eine Speicherung von Daten in einer Speichereinrichtung (36) und/oder ein Auslesen von Daten aus der Speichereinrichtung (36) des Unterhaltungsspielgerätes (2) oder der Rechnereinrichtung (21) durch eine entsprechende Befehlseingabe an dem Unterhaltungsspielgerät (2) oder der Rechnereinrichtung (21) erfolgt.

## Claims

1. Amusement machine having a cash processing device (17) and a computer-controlled game process control (24) which is accommodated in a housing (1) having a storage tray (22), wherein below the surface of the storage tray (22) a stationary device (23) linked to the game process control (24) for wireless energy transmission to a storage battery (20) of a mobile computing device (21) is arranged, **characterized in that** the power supply of the device (23) is switched on when the game process control (24) is ready for operation and/or when a computing device located on the storage tray (22) is switched on, wherein the storage tray (22) is integrated into a cash output tray (19) and wherein in the case of a computing device (21) located on the storage tray (22) of the cash output tray (19), a money output device is deactivated, wherein the game process control (24) receives information from a first monitoring device (26), so that the cash processing device (17) is activated in such a manner that there is no cash payout and following removal of the computing device (21) from the storage tray (22) the cash payout into the cash output tray (19) is released.

2. Amusement machine according to Claim 1, **characterized in that** the stationary device (23) comprises an induction coil and a recognition device for power data of the storage battery.

3. Amusement machine according to Claim 1, **characterized in that** the stationary device (23) comprises a radio interference filter (32).

4. Amusement machine according to one of Claims 1 to 2, **characterized in that** the stationary device (23) comprises a receiver system (35) for electromagnetic waves which is coupled to a processor adjusting the stationary device (23) for wireless energy transmission to a storage battery (20) requiring charging.

5. Amusement machine according to Claim 4, wherein the receiver system (35) is adapted for communication with a transponder (34) attributable to one of the mobile computing devices (21).

6. Amusement machine according to Claim 5, wherein a player profile stored in a storage device (36) of the game process control (24) can be activated by means of the stationary device (23) when the transponder (34) is detected.

7. Amusement machine according to Claim 6, **characterized in that** the player profile comprises at least one count of a point bank (11) and/or a credit display (12) of the amusement machine (2), wherein the count can be stored when the mobile computing device (21) is removed from a coverage area of the receiver system (35).

8. Amusement machine according to Claim 6 or 7, **characterized in that** when the transponder (34) of the mobile computing device (21) is detected, data is stored in a storage device (36) and/or data is retrieved from the storage device (36) of the amusement machine (2) or the computing device (21) via a corresponding command input to the amusement machine (2) or the computing device (21).

## Revendications

1. Appareil de jeu de divertissement avec un dispositif de traitement d'argent (17) et une commande de déroulement de jeu (24) pilotée par ordinateur, qui est logée dans un boîtier (1) présentant une surface de contact (22), un dispositif fixe (23) relié à la commande de déroulement de jeu (24) étant disposé sous la surface de contact (22) pour transférer de l'énergie sans fil à un accumulateur (20) d'un dispositif informatique mobile (21), **caractérisé en ce que** l'alimentation électrique du dispositif (23) est activée lorsque la commande de déroulement de jeu (24) est en état de marche et/ou lorsque le dispositif informatique (21) est posé sur la surface de contact (22), la surface de contact (22) est intégrée dans un plateau de distribution d'argent (19), et dans le cas d'un dispositif informatique (21) reposant sur la surface de contact (22) du plateau de distribution d'argent (19), un dispositif de versement d'argent est désactivé, la commande de déroulement de jeu (24) reçoit une information d'un premier dispositif de surveillance (26) pour commander le dispositif de traitement d'argent (17) de telle sorte qu'aucun versement d'argent n'est effectué et, après le retrait du dispositif informatique (21) de la surface de contact (22), le versement d'argent est autorisé dans le plateau de distribution d'argent (19).

2. Appareil de jeu de divertissement selon la revendication 1, **caractérisé en ce que** le dispositif fixe (23) comprend une bobine d'induction et un dispositif de reconnaissance pour les données de puissance de l'accumulateur.

3. Appareil de jeu de divertissement selon la revendication 1, **caractérisé en ce que** le dispositif fixe (23) comprend un filtre antiparasite (32).

4. Appareil de jeu de divertissement selon l'une des revendications 1 à 2, **caractérisé en ce que** le dispositif fixe (23) comprend un système récepteur (35) d'ondes électromagnétiques couplé à un processeur qui adapte le dispositif fixe (23) pour le transfert d'énergie sans fil à un accumulateur (20) à charger.

5. Appareil de jeu de divertissement selon la revendication 4, dans lequel le système récepteur (35) est conçu pour communiquer avec un transpondeur (34) pouvant être affecté au dispositif informatique mobile (21).

6. Appareil de jeu de divertissement selon la revendication 5, dans lequel un profil de joueur enregistré dans un dispositif de mémoire (36) de la commande de déroulement de jeu (24) peut être activé au moyen du dispositif fixe (23) lors de la reconnaissance du transpondeur (34).

7. Appareil de jeu de divertissement selon la revendication 6, **caractérisé en ce que** le profil de joueur comprend au moins un état de compteur d'une banque de points (11) et/ou d'un affichage de crédit (12) de l'appareil de jeu de divertissement (2), l'état de compteur pouvant être mémorisé lors d'un retrait du dispositif informatique mobile (21) d'une zone de détection du système récepteur (35).

8. Appareil de jeu de divertissement selon la revendication 6 ou 7, **caractérisé en ce qu'**après une reconnaissance du transpondeur (34) du dispositif informatique mobile (21), une mémorisation de données dans un dispositif de mémoire (36) et/ou une lecture de données dans le dispositif de mémoire (36) de l'appareil de jeu de divertissement (2) ou du dispositif informatique (21) est effectuée par une entrée de commande correspondante sur l'appareil de jeu de divertissement (2) ou le dispositif informatique (21).
